# FASCICULE DE BREVET EUROPEEN

(11) **EP 1 083 367 B1**
(45) Date de publication et mention de la délivrance du brevet: **11.02.2004**
(21) Numéro de dépôt: 00116586.9
(22) Date de dépôt: 01.08.2000
(51) Int. Cl.: F16G 11/10, A43C 7/00

(54) **Attache Lacet**
Schnürverschluss
String fastener

(30) Priorité: 08.09.1999 FR 9911396
(43) Date de publication de la demande: 14.03.2001
(73) Titulaire: Salomon S.A., 74370 Metz-Tessy (FR)
(72) Inventeur: Azam, Guy, 73100 Aix Les Bains (FR)

(56) Documents cités:
- EP-A- 0 629 793
- US-A- 307 806
- US-A- 2 200 895
- US-A- 4 379 358

## Description

L'invention concerne un dispositif d'attache d'un lien souple présentant un corps creux doté d'un canal de guidage qui forme un entonnoir pour une pièce de coincement mobile en translation, cette pièce de coincement étant soumise à l'action permanente d'un élément élastique la poussant dans l'entonnoir où passe le lien.

Les dispositifs d'attache connus de ce type, communément appelés attaches lacet, sont surtout utilisés dans l'habillement pour assurer le serrage et/ou l'ajustement d'un vêtement ou d'une chaussure au moyen d'un lacet, ainsi que dans le domaine des bagages. Ces attaches lacet se substituent avantageusement aux noeuds car il suffit de les faire coulisser sur les extrémités libres d'un brin ou des deux brins d'un lacet dans le sens du serrage et/ou de l'ajustement jusqu'à la position de blocage souhaitée pour que le système de serrage soit automatiquement fermé, et ce quelle que soit la tension exercée sur les extrémités retenues des brins.

On peut citer à titre d'exemple les brevets américains n° 307 806 et n° 2 200 895, ainsi que le brevet européen n° 629 793 qui décrivent de tels attaches lacet.

Selon ces documents, l'attache lacet présente un corps creux dont le canal de guidage forme un entonnoir à l'intérieur duquel une pièce de coincement mobile en translation est soumise à l'action d'un ressort. Ce ressort est disposé de manière à pousser en permanence la pièce mobile de coincement contre les bords du canal de guidage du côté où ce dernier se rétrécit afin de pincer les brins du lacet qui sont interposés. Par ces dispositions la pièce mobile de coincement fonctionne comme un coin qui empêche automatiquement le coulissement des brins du lacet seulement lorsque ceux-ci sont sollicités à se déplacer dans la même direction que celle de la poussée de l'élément élastique. En effet, dans le cas où les brins sont sollicités dans la direction opposée à l'action de ce dernier, il suffit que l'effort de tirage auquel ils sont soumis soit suffisant pour contrebalancer cette action et les frottements qui en résultent pour ainsi permettre leur coulissement dans le canal de guidage du corps creux. Ce type d'attache lacet permet donc de bloquer automatiquement l'un ou les deux brins d'un lacet dans une direction de coulissement seulement, choisie de préférence pour correspondre au serrage, et de freiner ce(s) brin(s) du lacet dans la direction opposée.

Il suffit par conséquent de positionner l'attache lacet sur les extrémités libres des brins du lacet pour qu'il puisse coulisser sur ces dernières dans le sens du serrage et être bloqué dans le sens inverse, soit dans le sens du desserrage. L'attache lacet permet ainsi de modifier/ajuster la longueur des extrémités des brins du lacet qui sont retenues dans le système de serrage tout en assurant la fermeture automatique de ce dernier dès que l'attache lacet est relâché.

En pratique, l'utilisateur exerce d'abord une traction sur les extrémités libres du lacet avec une main puis descend l'attache lacet le long des brins au plus près des organes de retenue et de guidage du système de serrage avec l'autre main.

Toujours selon ces documents, il est également décrit qu'un élément de manoeuvre est associé à la pièce mobile de coincement en vue de permettre le déblocage volontaire de l'attache lacet sur les brins du lacet, et ainsi la libération du système de laçage, voire son desserrage.

Plus précisément, dans ces réalisations de l'art antérieur, le déblocage de l'attache lacet s'effectue en exerçant sur l'élément de manoeuvre une traction qui force la pièce de coincement à reculer relativement à l'entonnoir que forme le canal et à l'encontre de la poussée que le ressort exerce sur cette dernière.

Par cette traction l'effet de coincement est supprimé et l'attache lacet peut coulisser sur les extrémités libres des brins du lacet en procurant de manière inhérente davantage de longueur aux extrémités des brins qui sont retenues dans le système de serrage. Par conséquent, ce dernier est libre de se desserrer pour au moins la valeur de cette augmentation de longueur.

Par contre, dès que la traction sur l'élément de manoeuvre cesse, le ressort rappelle automatiquement la pièce de coincement contre les brins du lacet et provoque à nouveau le blocage de l'attache lacet. Il est donc nécessaire de maintenir manuellement l'effort de traction sur l'élément de manoeuvre tant que le desserrage souhaité n'est pas atteint. La manipulation de déblocage de ces attaches lacet, et surtout l'appréciation de la longueur du lacet, ou du lien, à libérer pour obtenir le desserrage adéquat exigent par conséquent l'attention constante de l'utilisateur.

De plus, compte tenu de la petitesse des attaches lacet et donc de celle de leur élément de manoeuvre, l'utilisateur doit être très précis dans ses gestes pour accrocher ou saisir ce dernier et le déplacer en translation par rapport au corps creux. Cette exigence de précision gestuelle est évidemment moindre lorsque l'élément de manoeuvre est particulièrement mis en saillie par rapport au corps creux comme dans la réalisation décrite dans le document US 2 200 895. C'est également le cas lorsque l'élément de manoeuvre est doté d'une zone profilée destinée à servir de siège pour l'extrémité d'un doigt, tel qu'exposé dans le document EP 629 793.

Il n'en demeure pas moins que même avec ces dispositions particulières que la manipulation peut présenter un aspect rébarbatif, notamment lorsque l'utilisateur porte des gants, ce qui est très fréquent en hiver dans les régions froides. En effet, malgré la mise en évidence de l'élément de manoeuvre les gants empêchent de percevoir sa position exacte, et ce d'autant plus que les attaches lacet sont généralement placés dans des zones protégées ou relativement peu exposées que ce soit sur des vêtements, des chaussures, des bagages,...etc.

L'utilisateur est donc contraint le plus souvent à quitter ses gants pour débloquer et manoeuvrer ce type d'attaches lacet connu.

Le but de la présente invention est de remédier à ces inconvénients et vise à fournir à l'utilisateur un moyen de manoeuvre capable, d'une part, de neutraliser la fonction de blocage automatique du dispositif d'attache sur le lien de manière stable dans le sens du desserrage du lien, et d'autre part, capable de réenclencher cette fonction de blocage automatique dès que le lien est déplacé dans le sens du serrage. L'utilisateur est ainsi dispensé de maintenir manuellement et de manière constante le moyen de manoeuvre dans la position correspondant au déblocage pour obtenir le desserrage souhaité. Il est également dispensé de réactionner le moyen de manoeuvre pour réenclencher la fonction de blocage puisqu'il lui suffit de tirer sur le lien dans le sens du serrage pour remettre le dispositif d'attache dans sa situation première.

Un autre but est de fournir un moyen de manoeuvre facile à atteindre et actionnable par une simple pression au lieu d'exiger un déplacement en translation. L'utilisateur peut ainsi garder ses gants s'il en est pourvu et peut éventuellement se servir d'un autre matériel, tel qu'un bâton de ski par exemple, pour agir sur le moyen de manoeuvre.

Selon l'invention, le dispositif d'attache d'un lien souple présente un corps creux doté d'un canal de guidage qui forme un entonnoir dans lequel une pièce de coincement mobile en translation est soumise à l'action permanente d'un élément élastique la poussant dans l'entonnoir où passe le lien, cette disposition permettant de bloquer ce dernier lorsqu'il est sollicité à coulisser dans la même direction que la pièce de coincement, et de le laisser glisser dans la direction opposée, à l'encontre de la poussée de l'élément élastique.

Le dispositif d'attache se caractérise par le fait que le corps creux est logé dans un carter où il peut se déplacer en translation parallèlement à la pièce de coincement, et par le fait que la pièce de coincement est maintenue en translation dans le carter d'un côté au moyen de l'élément élastique qui agit directement entre elle et le carter, et du côté opposé au moyen d'une butée fixe solidaire du carter.

Il se caractérise également par le fait qu'une butée escamotable est prévue sur le carter pour coopérer avec le corps creux afin de le positionner en pression contre la pièce de coincement ou de le laisser libre de se déplacer en éloignement de cette dernière. Plus précisément, dans une première position la butée escamotable retient le corps creux en pression contre la pièce de coincement et le lien interposé. Au contraire, dans une deuxième position, la butée escamotable est effacée et laisse le corps creux libre en translation par rapport au carter et à la pièce de coincement qui, s'appuyant alors sur la butée du carter, se trouve neutralisée vis à vis du lien.

Selon un mode de réalisation le lien présente deux brins qui sont guidés dans le corps creux de manière sensiblement symétrique le long du canal de guidage, en suivant la forme d'entonnoir de ce dernier. En relation avec les brins du lien, des conduits de guidage sont réalisés dans le carter en respect de la position et de l'écartement de ces derniers à leurs sorties du corps creux.

Dans un mode construction, la butée escamotable est constituée d'une pièce basculante autour d'un axe. Cette pièce basculante présente, d'une part, un doigt d'arrêt dirigé vers le corps creux, pour permettre la retenue de ce dernier dans le carter contre la pièce de coincement, et d'autre part, un moyen de manoeuvre dirigé vers l'extérieur du carter pour effacer le doigt d'arrêt par rapport au corps creux et ainsi permettre la libération de ce dernier dans le carter et vis à vis de la pièce de coincement.

Complémentairement, un ressort de rappel est intégré à la butée escamotable pour placer automatiquement son doigt d'arrêt en position de retenue du corps creux dès que ce dernier, après déplacement en translation dans le carter, est correctement positionné par rapport à la pièce de coincement pour pincer le lien. Selon une construction préférée, le ressort de rappel sollicite en permanence le doigt d'arrêt vers le corps creux ce qui empêche ce dernier, par le frottement induit, de ballotter dans le carter lorsque la butée escamotable est effacée.

Selon une caractéristique du dispositif d'attache, le moyen de manoeuvre de la butée escamotable est actionnable dans une direction transversale, voire sensiblement perpendiculaire au sens du déplacement en translation du corps creux dans le carter. Par conséquent, il suffit d'une simple pression sur le moyen de manoeuvre, dirigée perpendiculairement au carter, pour effacer le doigt d'arrêt par rapport au corps creux qui peut alors s'éloigner de la pièce de coincement et laisser le lien coulisser librement dans le sens du desserrage.

Dans un autre mode de construction, la butée escamotable est constituée par un bouton poussoir axé transversalement au sens du déplacement en translation du corps creux.

Selon une construction préférée, le bouton poussoir commande un doigt d'arrêt qui remplit deux fonctions successives, l'une, de retenue du corps creux pour la position de serrage, c'est-à-dire avec blocage automatique, et l'autre, d'arrêt en translation de la pièce de coincement pour la position de desserrage, c'est-à-dire avec libération du lien. Dans cette construction, le bouton poussoir est une patte élastique qui forme une partie de la paroi du carter et dont une extrémité, libre, est munie d'un moyen de manoeuvre dirigé vers l'extérieur et d'un doigt d'arrêt dirigé vers l'intérieur. Un décrochement est réalisé dans la patte élastique afin d'autoriser son déplacement en flexion vers le corps creux lorsqu'on exerce une pression sur le moyen de manoeuvre en vue d'effacer le doigt d'arrêt par rapport à ce dernier. Ce décrochement se prolonge par ailleurs dans l'épaisseur du doigt d'arrêt où il constitue une encoche offrant un passage permettant au corps creux de se déplacer en translation dans le carter en direction du doigt d'arrêt malgré que celui-ci y est davantage mis en saillie consécutivement à la poussée effectuée sur le moyen de manoeuvre. Par ces dispositions, lorsqu'on efface le doigt d'arrêt par rapport au corps creux, on le rend actif vis à vis de la pièce de coincement. En effet, le corps creux se déplace en direction du doigt d'arrêt au-delà de sa position initiale de retenue, grâce à l'encoche du doigt d'arrêt, et c'est la pièce de coincement qui, poussée par son élément élastique dans l'entonnoir formé dans le canal de guidage du lien, vient buter contre le doigt d'arrêt. Dans cette position, d'une part, le lien n'est plus pincé et peut par conséquent coulisser librement dans le sens du desserrage, et d'autre part, du fait que la patte élastique tend tout naturellement à revenir dans sa position initiale, le doigt d'arrêt prend appui, par l'intermédiaire de l'encoche, contre le corps creux et dans une direction transversale à ce dernier. Ainsi, comme précédemment, le doigt d'arrêt empêche le corps creux de ballotter dans le carter.

Dans ces divers modes de construction exposés ci-avant, le réenclenchement de la fonction de blocage automatique exige simplement que le corps creux soit ramené contre la pièce de coincement.

A cet effet, le canal de guidage en forme d'entonnoir du corps creux est doté d'une surface de frottement qui oppose une certaine résistance au coulissement du lien dans la direction de la pièce de coincement. Cette surface de frottement est réalisée de sorte que la force induite qui s'oppose au glissement provoque le déplacement du corps creux dans le carter, en même temps que la pièce de coincement et à l'encontre de la poussée de l'élément élastique. De cette manière, le corps creux étant ramené dans sa position première contre la pièce de coincement par rapport au carter, le doigt d'arrêt de la butée escamotable peut basculer en position active de retenue du corps creux.

Afin de favoriser davantage le rappel du corps creux contre la pièce de coincement, et donc d'augmenter l'intensité de la force induite qui s'oppose au glissement, les conduits de guidage réalisés dans le carter sont plus écartés que les brins du lien à leur sortie du corps creux.

L'invention sera du reste mieux comprise en se reportant à la description qui va suivre en référence aux dessins schématiques annexés qui illustrent deux modes de réalisation.
La figure 1 représente, vue en perspective, une chaussure de sport comportant un système de serrage avec un lien qui est doté d'un dispositif d'attache selon un premier mode de réalisation.
La figure 2 est une vue en coupe du dispositif d'attache de la figure 1 vu selon la ligne II-II de la figure 3 montrant le dispositif d'attache avec sa fonction de blocage automatique du lien enclenchée, c'est-à-dire mis en position de serrage.
La figure 3 montre le dispositif d'attache de la figure 2 vue en coupe selon la ligne III-III.
Les figures 4 et 5 représentent le dispositif d'attache des figures 2 et 3 avec sa fonction de blocage automatique du lien neutralisée, c'est-à-dire mis en position de desserrage.
Les figures 6, 7, 8 et 9 illustrent un dispositif d'attache selon un deuxième mode de réalisation.

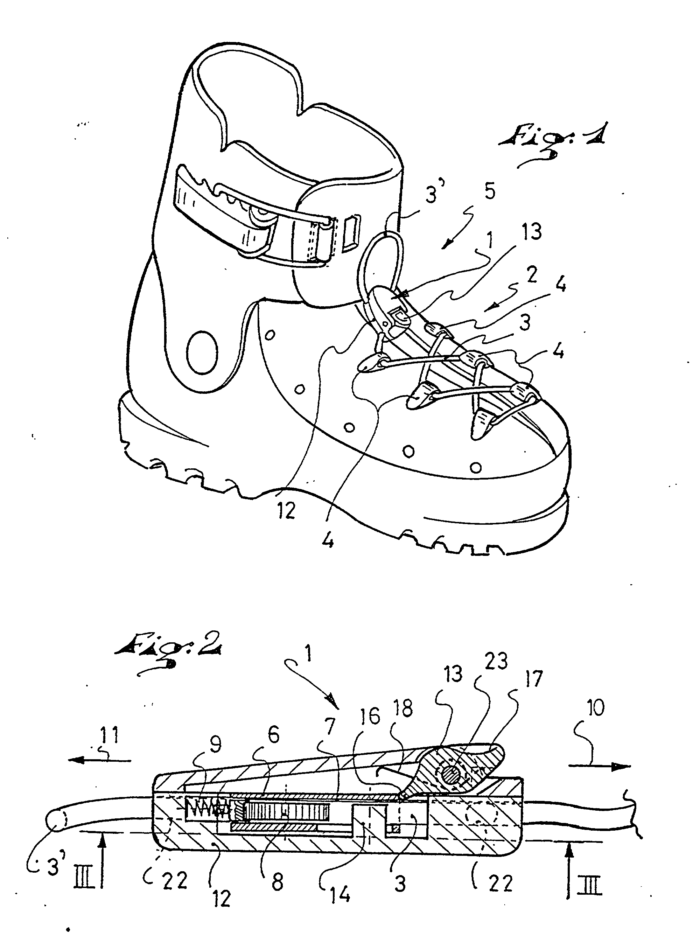

Dans l'exemple d'application illustré à la figure 1, le dispositif d'attache 1 est mis en oeuvre sur une chaussure 5 dont un système de serrage 2 utilise un lacet 3 en guise de lien, et des passants ou oeillets 4. Le système de serrage 2 est représenté sur la partie de la chaussure 5 qui correspond à la zone antérieure du pied de l'utilisateur mais pourrait, bien entendu, s'étendre sur la partie qui entoure la cheville.

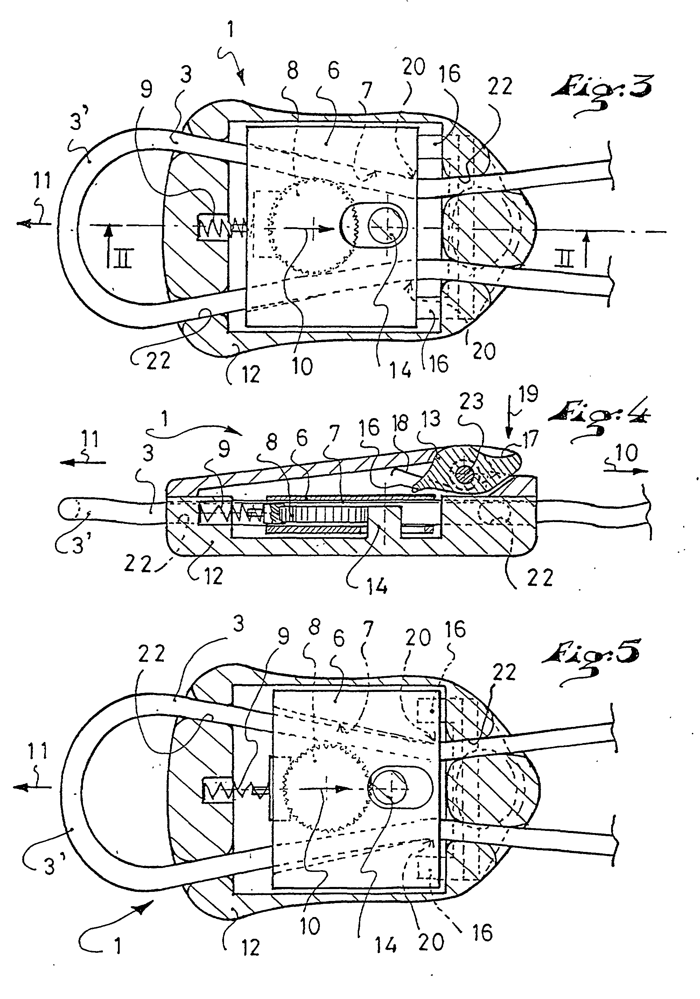

Comme le montrent plus particulièrement les figures 2 à 5, le dispositif d'attache 1 présente un corps creux 6 doté d'un canal de guidage 7 qui forme un entonnoir et une pièce de coincement 8, mobile en translation dans l'entonnoir du canal 7, et soumise à l'action d'un élément élastique 9 qui la pousse en permanence dedans.

Selon une caractéristique, le corps creux 6 est logé dans un carter 12 où il est susceptible de se déplacer en translation, parallèlement à la pièce de coincement 8, entre deux positions extrêmes déterminées par une butée escamotable 13 située sur le carter 12. Plus précisément, la butée escamotable 13 est constituée d'une pièce basculante, autour d'un axe 23, présentant au moins un doigt d'arrêt 16 dirigé vers le corps creux et un moyen de manoeuvre 17 dirigé vers l'extérieur du carter 12. Un ressort de rappel 18 est par ailleurs intégré à la butée escamotable 13 pour solliciter en permanence son doigt d'arrêt 16 vers le corps creux 6.

La pièce de coincement 8 est, quant à elle, maintenue de manière élastique dans le carter 12 d'un côté au moyen de l'élément élastique 9 qui interagit entre elle et ce dernier et de l'autre côté, au moyen d'une butée 14 portée par le carter 12. Les deux brins de lien 3 sont, de préférence, guidés dans le corps creux 6 de manière sensiblement symétrique le long du canal de guidage 7 en suivant la forme en entonnoir de ce dernier. Bien entendu, des conduits de guidage 22 des brins du lien 3 sont alors réalisés dans le carter 12 en respect de la position et de l'écartement des brins à leurs sorties du corps creux 6.

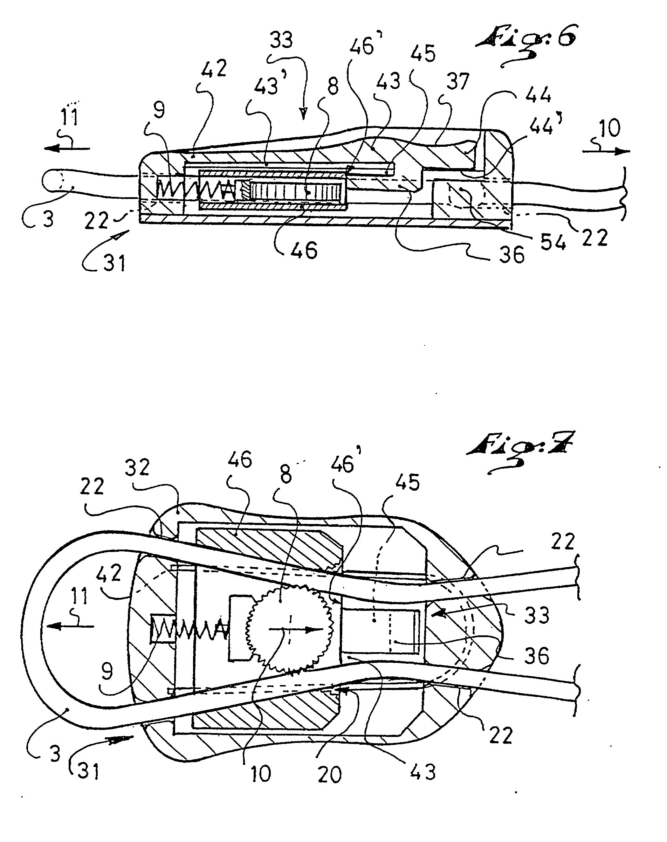

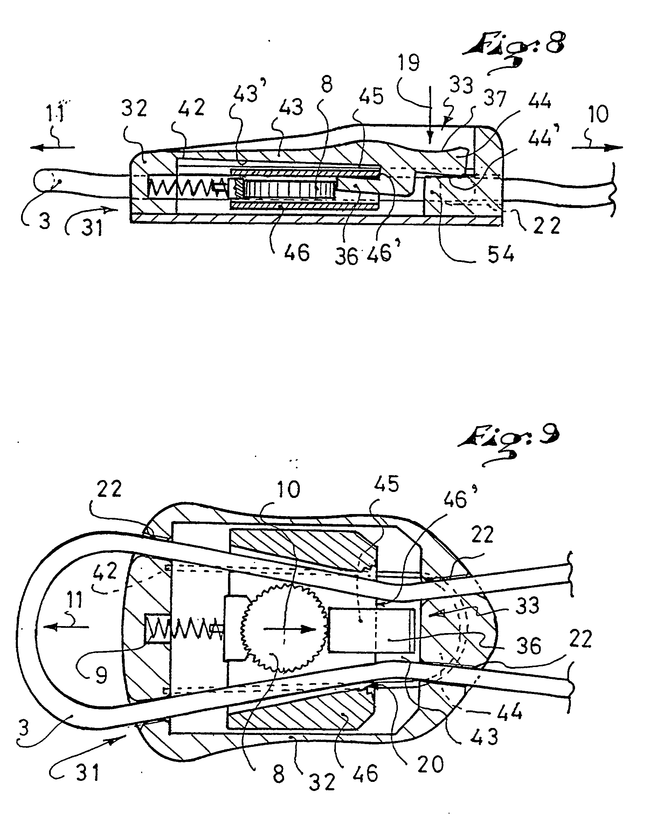

Ces différentes dispositions permettent par conséquent, soit de retenir le corps creux 6 en pression contre la pièce de coincement 8 lorsque le doigt d'arrêt 16 est enclenché, tel qu'illustré sur les figures 2 et 3, soit de libérer le corps creux 6 par rapport à la pièce de coincement 8 lorsque le doigt d'arrêt 16 est effacé, tel qu'illustré sur les figures 4 et 5.

En fait, lorsque le corps creux 6 est retenu en pression contre la pièce de coincement 8, figures 2 et 3, le dispositif d'attache 1 fonctionne de la même manière que les dispositifs connus de l'art antérieur cité précédemment. En effet, le lien 3 se trouve pincé entre l'entonnoir du canal de guidage 7 du corps creux 6 et la pièce de coincement 8 qui est poussée par l'élément élastique 9 dans l'entonnoir, tel qu'indiqué par la flèche 10. De ce fait, toute sollicitation sur le lien 3 tendant à le faire coulisser dans la même direction que celle 10 de poussée de l'élément élastique 9 provoque son blocage pur et simple par effet de coincement de la pièce 8.

Inversement, une sollicitation dans la direction opposée, tel qu'indiqué par la flèche 11, provoque un déplacement relatif de la pièce de coincement 8 dans cette même direction 11 à l'encontre de la poussée de l'élément élastique 9 qui fléchit d'autant, et ce tant que la force qui s'oppose au glissement du lien 3 dans le canal de guidage 7 reste supérieure à celle, résistante, de l'élément élastique 9. Ensuite, dès que le rapport des forces s'inverse, le lien 3 glisse dans le canal de guidage 7 tout en maintenant la pièce de coincement 8 écartée de la pièce creuse 6.

Dans cette position de retenue du corps creux 6 contre la pièce de coincement 8, la fonction de blocage automatique du dispositif d'attache 1 sur le lien 3 est donc assurée. En effet, le serrage s'effectue en tirant sur la demi boucle 3' du lien 3 qui coulisse dans la direction 11, et dès que la traction cesse l'élément élastique 9 repousse la pièce de coincement 8 contre le corps creux 6 dans l'entonnoir formé dans le canal de guidage 7, provoquant à nouveau le blocage du lien 3 dans la direction 10 qui correspond au sens du desserrage.

A l'inverse, lorsque le corps creux 6 est libéré par rapport à la pièce de coincement 8, tel que cela est représenté aux figures 4 et 5, la fonction de blocage automatique se trouve neutralisée. En effet, dès que le corps creux 6 est libéré par le doigt d'arrêt 16 de la butée escamotable 13, actionnable par une simple pression selon 19 sur le moyen de manoeuvre 17, la pièce de coincement 8 se déplace alors dans la direction 10 sous la poussée de l'élément élastique 9 et vient s'arrêter contre la butée 14 du carter 12. Dans son déplacement, elle entraîne avec elle le corps creux 6 qui, rendu libre en translation par rapport à elle dès l'instant où elle s'appuie sur la butée fixe 14, relâche le lien 3 qui peut alors coulisser dans la direction 10 du desserrage. Comme cela est particulièrement visible sur la figure 4, le corps creux 6 se trouve alors engagé et maintenu sous le doigt d'arrêt 16 de la butée escamotable 13 ce qui empêche son ballottement dans le carter 12 et le réenclenchement inopiné de cette dernière. La commande en desserrage du lien 3 au moyen de la butée escamotable 13 procure donc une position stable qui évite à l'utilisateur de maintenir une pression ou toute autre action sur le dispositif d'attache 1 pour obtenir le desserrage adéquat.

S'agissant de réenclencher la fonction de blocage automatique, on remarque qu'il suffit de ramener le corps creux 6 vers la pièce de coincement 8 et à l'encontre de la poussée de l'élément élastique 9 jusqu'à sa position première, dite de "retenue", où le doigt d'arrêt 16 de la butée escamotable 13 peut basculer en position active sous l'action du ressort de rappel 18, figures 2 et 3. Pour que cette manoeuvre puisse s'effectuer simultanément avec celle de serrage, dans la direction 11, le canal de guidage 7 en forme d'entonnoir est doté d'une surface de frottement 20 qui oppose une certaine résistance au coulissement du lien 3. Cette surface de frottement 20, plus particulièrement localisée du côté le plus rétréci de l'entonnoir dans le canal de guidage 7, est réalisée de sorte que la force induite qui s'oppose au glissement du lien 3 provoque le déplacement du corps creux 6 dans la direction 11 en même temps que la pièce de coincement 8 et force l'élément élastique 9 à fléchir. Le réenclenchement de la fonction de blocage automatique se réalise ainsi simultanément avec une manoeuvre de serrage en tirant sur la demi boucle 3' du lien 3 dans la direction 11, tandis que le carter 12 du dispositif d'attache 1 est retenu ou descendu le long des brins du lien 3 au plus près des organes de retenue 4, tel que les passants du système de serrage 2 illustré sur la figure 1.

Il est bien entendu que le système de serrage 2 peut comporter un lien 3 à brin unique ou à deux brins.

Encore, le dispositif d'attache 1 décrit dans cet exemple d'application est simplement monté sur le lien 3 d'un système de serrage 2 du type à laçage, mais peut être fixé sur un support tel qu'une partie de la tige d'une chaussure, d'un vêtement ou d'un bagage, sans pour cela sortir du cadre de l'invention.

Par ailleurs, la pièce de coincement 8 pourrait être en forme de coin au lieu d'être circulaire.

Selon un deuxième mode de réalisation du dispositif d'attache 31 tel qu'illustré sur les figures 6, 7, 8 et 9, la butée escamotable 33 se présente comme un bouton poussoir formé d'une patte élastique 43 qui constitue une partie de la paroi du carter 32 et une extrémité libre 44 qui est munie d'un moyen de manoeuvre 37 dirigé vers l'extérieur, et d'un doigt d'arrêt 36 dirigé vers l'intérieur. Cette patte élastique 43 est prévue avec un décrochement 43' en vis à vis du corps creux 46 ce qui permet de la déplacer en flexion vers ce dernier par une pression exercée sur le moyen de manoeuvre 37 situé à son extrémité libre 44. Une encoche 45 prolonge le décrochement 43' dans le doigt d'arrêt 36 pour offrir un passage au corps creux 46 lorsque le doigt d'arrêt 36 est effacé par rapport à ce dernier tel qu'illustré sur les figures 8 et 9, c'est-à-dire lorsque la fonction de blocage automatique est neutralisée en vue d'autoriser le desserrage du lien 3.

Grâce à ces différentes dispositions, le doigt d'arrêt 36 remplit en fait deux fonctions successives l'une, de retenue du corps creux 46 pour la position de serrage, et l'autre, de butée pour la pièce de coincement 8 pour la position de desserrage.

Plus précisément, dans une première position, lorsque le dispositif d'attache 31 a sa fonction de blocage automatique enclenchée, figures 6 et 7, la butée escamotable 33 est en saillie vers l'extérieur par rapport au carter 32 et son doigt d'arrêt 36 se présente en face du corps creux 46 qu'il retient en pression contre la pièce de coincement 8 soumise à l'action permanente de son moyen élastique 9 de rappel.

Dans une deuxième position, lorsque la fonction de blocage automatique est neutralisée, figures 8 et 9, la butée escamotable 33 est partiellement enfoncée dans le carter 32 et l'encoche 45 se positionne en vis à vis du corps creux 46, et notamment en vis à vis de sa zone 46' précédente de retenue. Le corps creux 46 étant ainsi libéré, la poussée exercée par l'élément élastique 9 sur la pièce de coincement 8 et le lien 3 interposé provoque son déplacement en translation dans l'encoche 45 en direction du doigt d'arrêt 36 jusqu'à ce que la pièce de coincement 8 bute contre ce dernier. A partir de là, le corps creux 46 restant libre de s'éloigner de la pièce de coincement 8, plus aucune pression ne s'exerce sur le lien 3 qui peut alors coulisser librement dans le sens du desserrage indiqué par la flèche 10.

Le doigt d'arrêt 36 se substitue en fait au doigt d'arrêt 16 et à la butée 14 du dispositif d'arrêt 1 décrit en référence aux figures 1 à 5.

Selon certains détails de construction la patte élastique 43, et notamment son extrémité libre 44, est limitée dans sa course lorsque la butée escamotable 33 est enfoncée selon 19 pour positionner correctement l'encoche 45 en face de la zone 46' de retenue du corps creux 46. A cet effet un épaulement 54 est réalisé dans le carter 32 en vis à vis d'une rebord d'appui 44' obtenu dans l'extrémité libre 44 de la patte élastique 43.

Ce mode de réalisation du dispositif d'attache 31 diffère de celui 1 qui précède uniquement dans la conception de la butée escamotable 33, et donc les autres éléments constitutifs ne changent pas.

Il en est de même pour la description de réenclenchement de la fonction de blocage automatique qui s'effectue comme précédemment.

## Revendications

1. Dispositif d'attache (1, 31) d'un lien souple (3) présentant un corps creux (6, 46) doté d'un canal de guidage (7) qui forme un entonnoir dans lequel une pièce de coincement (8) mobile en translation est soumise à l'action d'un élément élastique (9) la poussant dans l'entonnoir où passe le lien (3) en vue de bloquer ce dernier lorsqu'il est sollicité en coulissement dans la même direction (10) que la pièce de coincement (8), et de permettre son coulissement dans la direction (11) opposée, à l'encontre de la poussée de l'élément (9),
**caractérisé en ce que** le corps creux (6, 46) est logé dans un carter (12, 32) où il peut se déplacer en translation parallèlement à la pièce de coincement (8),
et **caractérisé en ce que** la pièce de coincement (8) est maintenue en translation dans le carter (12, 32), d'un côté au moyen de l'élément élastique (9) qui agit directement entre elle et le carter (12, 32), et du côté opposé au moyen d'une butée (14, 36) portée par le carter (12, 32), une butée escamotable (13, 33) étant prévue sur le carter (12, 32) pour, dans une première position, retenir le corps creux (6, 46) en pression contre la pièce de coincement (8) et le lien (3) interposé, et dans une deuxième position, laisser le corps creux (6, 46) libre en translation par rapport au carter (12, 32) et à la pièce de coincement (8).

2. Dispositif selon la revendication 1, **caractérisé en ce que** le lien (3) présente deux brins qui sont guidés dans le corps creux (6, 46) de manière sensiblement symétrique le long du canal de guidage (7) en suivant la forme d'entonnoir de ce dernier, et **caractérisé en ce que** des conduits de guidage (22) des brins du lien (3) sont réalisés dans le carter (12, 32) en respect de la position et de l'écartement des brins du lien (3) à leurs sorties du corps creux (6, 46).

3. Dispositif selon l'une quelconque des revendications 1 ou 2, **caractérisé en ce que** la butée escamotable (13) est constituée d'une pièce basculante autour d'un axe (23), cette pièce basculante présentant, d'une part, un doigt d'arrêt (16) dirigé vers le corps creux (6), pour permettre la retenue de ce dernier dans le carter (12) contre la pièce de coincement (8), et d'autre part, un moyen de manoeuvre (17) dirigé vers l'extérieur du carter (12) pour effacer le doigt d'arrêt (16) par rapport au corps creux (6), et ainsi permettre la libération de ce dernier dans le carter (12) et vis à vis de la pièce de coincement (8), un ressort de rappel (18) sollicitant en permanence le doigt d'arrêt (16) vers le corps creux (6).

4. Dispositif selon l'une quelconque des revendications 1 ou 2, **caractérisé en ce que** la butée escamotable (33) se présente comme un bouton poussoir formé à partir d'une patte élastique (43) qui constitue une partie de la paroi du carter (32), cette patte élastique (43) ayant une extrémité (42) solidaire de ce dernier et une extrémité libre (44) qui est munie d'un moyen de manoeuvre (37) dirigé vers l'extérieur, et d'un doigt d'arrêt (36) dirigé vers l'intérieur.

5. Dispositif selon l'une quelconque des revendications 3 ou 4, **caractérisé en ce que** le moyen de manoeuvre (17, 37) de la butée escamotable (13, 33) est actionnable selon une direction (19) transversale au déplacement en translation du corps creux (6, 46) dans le carter (12, 32).

6. Dispositif selon la revendication 4, **caractérisé en ce que** le canal de guidage (7) en forme d'entonnoir du corps creux (6, 46) comporte une surface de frottement (20) qui oppose une certaine résistance au coulissement du lien (3) de sorte que la force qui s'oppose au glissement de ce dernier lors du serrage provoque le déplacement du corps creux (6, 46) dans le carter (12, 32), en même temps que la pièce de coincement (8) et à l'encontre de la poussée de l'élément élastique (9), jusqu'à l'amener dans une position déterminée permettant au doigt d'arrêt (16, 36) de la butée escamotable (13, 33) de basculer en position active assurant ainsi la retenue du corps creux (6, 46) dans la direction opposée, contre la pièce de coincement (8).

7. Dispositif selon la revendication 6, **caractérisé en ce que** le dispositif d'attache (1) est fixé sur un support.

8. Dispositif selon l'une quelconque des revendications 1 à 6, **caractérisé en ce que** la pièce de coincement (8) est de forme circulaire.

9. Dispositif selon l'une quelconque des revendications 1 à 6, **caractérisé en ce que** la pièce de coincement (8) est en forme de coin.

## Claims

1. Device (1, 31) for fastening a flexible tie (3) having a hollow body (6, 46) provided with a guiding channel (7) that forms a funnel in which a translationally movable blocking element (8) is subject to the action of an elastic element (9) that pushes it into the funnel where the tie (3) passes, in view of blocking the latter when it is biased to slide in the same direction (10) as the blocking element (8), and of enabling it to slide in the opposite direction (11) against the thrust of the elastic element (9),
**characterized in that** the hollow body (6, 46) is housed in a case (12, 32) where it can displace translationally parallel to the blocking element (8),
and **characterized in that** the blocking element (8) is maintained in translation in the case (12, 32), on one side by means of the elastic element (9) that acts directly between it and the case (12, 32), and on the opposite side by means of an abutment (14, 36) carried by the case (12, 32), a retractable abutment (13, 33) being provided on the case (12, 32) so as to retain the hollow body (6, 46) under pressure against the blocking element (8) and the interposed tie (3), in a first position, and to leave the hollow body (6, 46) free in translation with respect to the case (12, 32) and the blocking element (8), in a second position.

2. Device according to claim 1, **characterized in that** the tie (3) has two strands that are guided in the hollow body (6, 46), in a substantially symmetrical manner along the guiding channel (7), by following the funnel shape of the latter, and **characterized in that** conduits (22) for guiding the strands of the tie (3) are obtained in the case (12, 32) with respect to the position and spacing of the strands of the tie (3) at their exit from the hollow body (6, 46).

3. Device according to any of claims 1 or 2, **characterized in that** the retractable abutment (13) is constituted of a piece that tilts about an axis (23), this tilting piece having a stop finger (16) directed toward the hollow body (6) to enable the retention of the latter in the case (12) against the blocking element (8), on the one hand, and a control means (17) directed toward the outside of the case (12) to retract the stop finger (16) with respect to the hollow body (6) and thus enable the release of the latter in the case (12) and opposite the blocking element (8), on the other hand, a return spring (18) constantly biasing the stop finger (16) toward the hollow body (6).

4. Device according to any of claims 1 or 2, **characterized in that** the retractable abutment (33) is in the form of a push-button formed from an elastic lug (43) that constitutes a portion of the wall of the case (32), this elastic lug (43) having an end (42) affixed to the latter and a free end (44) that is provided with a control means (37) directed outwardly and with a stop finger (36) directed inwardly.

5. Device according to any of claims 3 or 4, **characterized in that** the control means (17, 37) of the retractable abutment (13, 33) can be actuated along a transverse direction (19) with respect to the translational displacement of the hollow body (6, 46) in the case (12, 32).

6. Device according to claim 4, **characterized in that** the funnel-shaped guiding channel (7) of the hollow body (6, 46) comprises a faction surface (20) that opposes a certain resistance to the sliding of the tie (3), such that the force that opposes the sliding of the latter during tightening causes the displacement of the hollow body (6, 46) in the case (12, 32), at the same time as the blocking element (8) and against the thrust of the elastic element (9), until bringing it in a predetermined position enabling the stop finger (16, 36) of the retractable abutment (13, 33) to tilt in the active position, thus ensuring the retention of the hollow body (6,46) in the opposite direction against the blocking element (8).

7. Device according to claim 6, **characterized in that** the fastening device (1) is fixed on a support.

8. Device according to any of claims 1-6, **characterized in that** the blocking element (8) is circular.

9. Device according to any of claims 1-6, **characterized in that** the blocking element (8) is wedge-shaped.

## Patentansprüche

1. Befestigungsvorrichtung (1, 31) für ein geschmeidiges Band (3), die einen Hohlkörper (6, 46) aufweist, der mit einem Führungskanal (7) versehen ist, der einen Trichter bildet, in welchem ein beweglich verschiebbares Einklemmstück (8) der Wirkung eines elastischen Elements (9) unterworfen wird, das dieses in den Trichter schiebt, durch welches das Verbindungsglied (3) geführt ist, um letzteres zu blockieren, wenn es belastet wird, beim Gleiten in die selbe Richtung (10) wie das Einklemmstück (8) und um sein Gleiten in entgegengesetzter Richtung (11) zu ermöglichen, beim Schieben des Elements (9),
**dadurch gekennzeichnet, dass** der Hohlkörper (6, 46) in einem Gehäuse (12, 32) untergebracht ist, in dem er sich parallel zu dem Einklemmstück verschieben kann (8),
und **dadurch gekennzeichnet, dass** das Einklemmstück (8) in Verschiebung in dem Gehäuse (12, 32) gehalten wird, von einer Seite mittels des elastischen Elements (9), das direkt zwischen ihr und dem Gehäuse (12, 32) agiert und von der entgegengesetzten Seite mittels eines Stoppers (14, 36), der von dem Gehäuse (12, 32) getragen wird, wobei ein versenkbarer Stopper (13, 33) auf dem Gehäuse vorgesehen ist, um, in einer ersten Position, den Hohlkörper (6, 46) im Druck gegen das Einklemm-Stück (8) und das eingefügte Bindeglied (3) zu halten, und, in einer zweiten Position, den Hohlkörper (6, 46) frei zu lassen in Verschiebung in Verhältnis zu dem Gehäuse (12, 32) und dem Einklemmstück (8).

2. Vorrichtung gemäß Anspruch 1, **dadurch gekennzeichnet, dass** das Band (3) zwei Stränge aufweist, die in den Hohlkörper (6, 46) in deutlich symmetrischer Weise entlang des Führungskanals (22) eingeführt werden, indem der Trichterform des letzteren gefolgt wird, und **dadurch gekennzeichnet, dass** die Führungskanäle (22) der Stränge des Bands (3) in dem Gehäuse (12, 32) realisiert sind, im Hinblick auf die Position und den Abstand der Stränge des Bands (3) bei ihrem Austritt aus dem Hohlkörper (6, 46).

3. Vorrichtung gemäß einem der Ansprüche 1 oder 2, **dadurch gekennzeichnet, dass** der versenkbare Stopper (13) durch ein Stück gebildet wird, ausklappbar um eine Achse (23), wobei das ausklappbare Stück einerseits einen Stellfinger (16) aufweist, der gegen den Hohlkörper (6) gerichtet ist, um das Zurückhalten des letzteren in dem Gehäuse (12) gegen das Einklemmstück (8) zu erlauben, und andererseits ein Mittel zum Manövrieren (17), das gegen das Äußere des Gehäuses (12) gerichtet ist, um den Stellfinger (16) rückzustellen im Verhältnis zum Hohlkörper (6) und damit die Freisetzung desselben in dem Gehäuse (12) und gegenüber dem Einklemm-Stück (8) zu erlauben, wobei eine Rückholfeder (18) den Stellfinger (16) zum Hohlkörper (6) hin belastet.

4. Vorrichtung gemäß einem der Ansprüche 1 oder 2, **dadurch gekennzeichnet, dass** der versenkbare Stopper (33) sich darstellt wie ein Druckknopf, der aus einer elastischen Klaue (43) hergestellt wird, die einen Teil der Wand des Gehäuses (32) bildet, wobei die elastische Klaue (43) ein Ende (42) aus dem selben Stück wie letzteres und ein freies Ende (44) aufweist, das mit Manövrierungs-Mitteln (37) ausgestattet ist, die zum Äußeren hin geführt sind, und einen Stellfinger (36), der zum Inneren hin geführt ist.

5. Vorrichtung gemäß einem der Ansprüche 3 oder 4, **dadurch gekennzeichnet, dass** die Mittel zum Manövrieren (17, 37) des versenkbaren Stoppers (13, 33) entlang einer Richtung (19) betätigt werden können, die transversal zu der Verlagerung durch Verschiebung des Hohlkörpers (6, 46) in dem Gehäuse (12, 32) ist.

6. Vorrichtung gemäß Anspruch 4, **dadurch gekennzeichnet, dass** der Führungskanal (7) des Hohlkörpers (6, 46) in Form eines Trichters eine Reibungsoberfläche (20) aufweist, die dem Gleiten des Bands beim Verschließen einen gewissen Widerstand entgegensetzt, derart, dass die Kraft, die sich dem Gleiten des letzteren beim Verschließen entgegensetzt, die Verlagerung des Hohlkörpers (6, 46) in dem Gehäuse (12, 32) bewirkt, zur gleichen Zeit wie das Einklemmstück (8) und unter der Wirkung des Schubs des elastischen Elements (9), Dis zum Führen desselben in eine bestimmte Position, die es dem Stellfinger (16, 36) des versenkbaren Stoppers (13, 33) erlaubt, in eine aktive Position zu kippen, wodurch die Zurückhaltung des Hohlkörpers (6, 46) in der entgegengesetzten Richtung gesichert wird, gegen das Einklemmstück (8).

7. Vorrichtung gemäß Anspruch 6, **dadurch gekennzeichnet, dass** die Befestigungsvorrichtung (1) auf einem Träger befestigt ist.

8. Vorrichtung gemäß einem der Ansprüche 1 bis 6, **dadurch gekennzeichnet, dass** das Einklemmstück (8) von runder Form ist.

9. Vorrichtung gemäß einem der Ansprüche 1 bis 6, **dadurch gekennzeichnet, dass** das Einklemmstück (8) die Form einer Münze besitzt.
